# FASCICULE DE BREVET EUROPEEN

(11) **EP 4 098 339 B1**
(45) Date de publication et mention de la délivrance du brevet: **31.01.2024**
(21) Numéro de dépôt: 22173537.6
(22) Date de dépôt: 16.05.2022
(51) Int. Cl.: B01D 3/32, B01D 3/00

(54) **SYSTÈME DE PURIFICATION D' ARGON PAR DISTILLATION CRYOGÉNIQUE**
SYSTEM ZUR REINIGUNG VON ARGON DURCH KRYOGENE DESTILLATION
SYSTEM FOR PURIFYING ARGON BY CRYOGENIC DISTILLING

(30) Priorité: 27.05.2021 FR 2105494
(43) Date de publication de la demande: 07.12.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: SAULNIER, Bernard, 78350 Jouy en Josas (FR); TRUEBA, Antonio, 78350 Jouy en Josas (FR)
(74) Mandataire: Air Liquide

(56) Documents cités:
- EP-A2- 1 016 457
- WO-A2-2015/121593
- FR-A1- 2 951 532
- US-A- 5 237 823
- US-A1- 2018 304 192
- US-A1- 2020 155 960
- HARRISON M E ET AL: "DISTILLATION COLUMN TROUBLESHOOTING", CHEMICAL ENGINEERING, ACCESS INTELLIGENCE ASSOCIATION, ROCKVILLE, MA, US, vol. 96, no. 4, 1 avril 1989 (1989-04-01), pages 121-128, XP000073164, ISSN: 0009-2460

## Description

La présente invention est relative à un système de purification d'argon par distillation cryogénique et à un appareil de séparation d'air par distillation cryogénique comprenant un tel système.

L'usage des énergies renouvelables dont la disponibilité ne peut pas être assurée de façon continue, accroît l'intérêt pour des appareils de séparation d'air par distillation cryogénique dont la consommation d'énergie peut être partiellement effacée de façon très significative.

La charge minimale des appareils conventionnels de séparation d'air par distillation cryogénique est essentiellement limitée par les compresseurs et par les colonnes de distillation. Pour ces dernières, l'état de l'art pour cette charge est de l'ordre de 50% de la charge nominale, ce qui est suffisant pour des appareils équipés d'un seul compresseur d'air, dont la charge minimale classique est plutôt de 60-70% de la charge nominale.

Mais dans la mesure où la transition énergétique pourrait rendre intéressante l'installation de 2 à 3 compresseurs d'air en parallèle, la charge minimale requise pour les colonnes de distillation pourrait atteindre 25-30% de la charge nominale.

L'objet de l'invention est d'abaisser la charge minimale d'un système de purification d'argon d'un appareil de séparation d'air par distillation cryogénique sans perte significative d'efficacité. La purification complète de l'argon par voie cryogénique est en effet très délicate, puisqu'elle requiert plus de 150 plateaux théoriques. Il est considéré comme particulièrement important d'assurer de maintenir tout au long de la colonne une parfaite distribution surfacique du liquide.

Il est envisageable de partager cette colonne en 4 à 8 tronçons, alimentés chacun par un distributeur de haute performance. Par distributeur haute performance, on entend un distributeur qui assure une répartition surfacique égale du débit à moins 2% près entre les différentes zones de la colonne, ces zones ayant une dimension caractéristique de l'ordre de grandeur de la hauteur d'un élément de garnissage, lorsque la charge de la colonne est au minimum pour lequel elle a été conçue et les écarts à la géométrie théorique sont au maximum des tolérances de fabrication.

Un exemple d'une simple colonne à huit tronçons est décrit dans FR-A-3084736. FR 2 951 532 A1 divulgue un système de purification d'argon par distillation cryogénique selon le préambule de la revendication 1.

La pratique, lorsqu'on souhaite abaisser la charge minimale de la colonne consiste à augmenter la flexibilité de chaque distributeur afin de conserver une distribution de haute qualité quand sa charge diminue. Par exemple, si les distributeurs sont constitués de goulottes percées de trous, on réduit la section perforée afin que la hauteur de liquide à charge réduite reste significativement supérieure (typiquement 20 à 50 fois) aux différences de niveau maximales entre trous, résultant de la construction. En conséquence, la hauteur du distributeur doit être augmentée pour pouvoir contenir la hauteur de liquide qui s'établira à pleine charge. En effet pour un distributeur réel, certains trous sont plus hauts que d'autres, à cause de l'imperfection de la fabrication des distributeurs, de leur installation dans la colonne, ou encore du défaut de verticalité de la colonne. Ainsi des différences peuvent apparaître, qui entraînent une différence de hauteur de liquide au-dessus des trous, et donc des différences de débit.

L'invention repose sur le constat que l'effet de défauts de distribution significatifs peut être presque totalement compensé par un mélange, même partiel, des liquides provenant de deux zones de la colonne avec des rapports de reflux différents, donc des compositions différentes. L'effet compensateur de ces mélanges est d'autant plus grand que les écarts de compositions sont significatifs, en valeur absolue.

Par conséquent, l'installation de distributeurs mélangeurs dans les zones inférieures de la colonne de purification d'argon, là où les teneurs en oxygène, et donc les écarts (en valeur absolue) dus à d'éventuels défauts de distribution, sont encore notables, corrige très efficacement l'effet de défauts de distribution. En revanche, dans la partie supérieure de la colonne de purification d'argon, il faudrait installer de nombreux distributeurs mélangeurs pour obtenir un effet comparable.

L'invention consiste donc à installer des distributeurs assurant une haute qualité de distribution dans la partie supérieure de la colonne de purification d'argon, tandis que le reste de la colonne pourra être équipé de distributeurs mélangeurs plus rudimentaires vis-à-vis de la distribution liquide, par exemple de moins grande hauteur, ou, en tous cas, permettant de réduire le coût total de la colonne, par exemple, parce que les distributeurs sont plus simples.

Le distributeur dont la qualité de distribution joue le rôle le plus essentiel dans l'appareil est celui juste en dessous du condenseur, tout à fait en haut de la colonne, puisqu'il distribue le liquide le plus pur.

Il est connu de purifier l'argon dans une seule colonne ou dans deux colonnes connectées en série. L'invention s'applique aux deux possibilités.

Selon un objet de l'invention, il est prévu un système de purification d'argon par distillation cryogénique comprenant :
i) Une seule colonne surmontée d'un condenseur de tête, une entrée de fluide dans la partie inférieure de la colonne, une sortie de fluide dans la partie supérieure de la colonne et N tronçons de distillation où N≥4, chaque tronçon étant composé d'un empilement de blocs de garnissage organisé, du genre ondulé-croisé, chaque bloc comprenant un paquet de lamelles ondulées rectangulaires, dont au moins les deux tronçons les plus hauts de la colonne sont équipés respectivement d'un premier distributeur de liquide et d'un deuxième distributeur de liquide, le deuxième distributeur étant capable d'assurer une fonction de mélange entre des liquides tombant sur le distributeur, chacun des premier et deuxième distributeurs étant disposé au-dessus du tronçon respectif et dont au moins deux tronçons les plus bas de la colonne, sont équipés respectivement d'un (N-1)ème et d'un Nième distributeurs de liquide, capables d'assurer une fonction de mélange entre des liquides tombant sur le distributeur, disposé au-dessus du tronçon respectif ou
ii) Une première colonne et une deuxième colonne surmontée d'un condenseur de tête, une entrée de fluide dans la partie inférieure de la première colonne, une sortie de fluide dans la partie supérieure de la deuxième colonne, des moyens reliant la tête de la première colonne et la cuve de la deuxième colonne pour permettant à un liquide de cuve de la deuxième colonne d'aller vers la tête de la première colonne et à un gaz de tête de la première colonne d'aller vers la deuxième colonne, les première et deuxième colonne comprenant au total N tronçons de distillation où N≥4, chaque tronçon étant composé d'un empilement de blocs de garnissage organisé, du genre ondulé-croisé, chaque bloc comprenant un paquet de lamelles ondulées rectangulaires, dont au moins les deux tronçons les plus hauts de la deuxième colonne sont équipés respectivement d'un premier distributeur de liquide et d'un deuxième distributeur de liquide capable d'assurer une fonction de mélange entre des liquides tombant sur le distributeur, chacun des premier et deuxième distributeurs étant disposé au-dessus du tronçon respectif et dont au moins deux tronçons les plus bas de la première colonne, sont équipés respectivement d'un (N-1)ème et d'un Nième distributeurs de liquide, capables d'assurer une fonction de mélange entre des liquides tombant sur le distributeur, disposé au-dessus du tronçon respectif
caractérisé en ce que
- les premier, deuxième, (N-1)ème et Nième distributeurs sont dimensionnés chacun pour contenir une hauteur maximale de liquide, celle(s) des premier et deuxième distributeurs étant supérieures à celle(s) des (N-1)ème et Nième distributeurs.

Ainsi la ou les hauteurs maximales de liquide pour laquelle ou lesquelles sont dimensionnées les premier et deuxième distributeurs est /sont supérieures à celle(s) pour laquelle ou lesquelles sont dimensionnés les (N-1)ème et Nième distributeurs.

Les premier et deuxième distributeurs ne sont pas nécessairement dimensionnés pour la même hauteur maximale de liquide.

Les N-1 ème et Nième distributeurs ne sont pas nécessairement dimensionnés pour la même hauteur maximale de liquide.

Selon d'autres aspects facultatifs :
- le système comprend une seule colonne comprenant N tronçons où N≥8, chaque tronçon étant composé d'un empilement de blocs de garnissage organisé, du genre ondulé-croisé, chaque bloc comprenant un paquet de lamelles ondulées rectangulaires, dont au moins les trois tronçons les plus hauts de la colonne sont équipés respectivement d'un premier distributeur de liquide, d'un deuxième distributeur de liquide capable d'assurer une fonction de mélange entre des liquides tombant sur le distributeur et d'un troisième distributeur de liquide capable d'assurer une fonction de mélange entre des liquides tombant sur le distributeur, chacun des premier, deuxième et troisième distributeurs étant disposé au-dessus du tronçon respectif et
- au moins les cinq tronçons les plus bas de la colonne étant équipés respectivement d'un distributeur de liquide, capable d'assurer une fonction de mélange entre des liquides tombant sur le distributeur, disposé au-dessus du tronçon respectif, les premier, deuxième, troisième, (N-4)ème (N-3)ème, (N-2)ème, (N-1)ème et Nième distributeurs sont dimensionnés chacun pour contenir une hauteur maximale de liquide, celle(s) des premier, deuxième et troisième distributeurs étant supérieure(s) à celle(s) des (N-4)ème (N-3)ème, (N-2)ème, (N-1)ème et Nième distributeurs.

- les (N-1)ème et Nième distributeurs sont dimensionnés pour contenir une hauteur maximale de liquide est inférieure(s) d'au moins 30% à celle(s) pour laquelle les premier et deuxième distributeurs sont dimensionnés.
- les (N-1)ème et Nième distributeurs sont dimensionnés pour une hauteur maximale de liquide est supérieure à 50mm.
- des premier et deuxième et éventuellement troisième distributeurs sont dimensionnés pour une hauteur maximale de liquide est entre 150 et 300mm.
- le système comprend une seule colonne comprenant N tronçons où N≥8, chaque tronçon étant composé d'un empilement de blocs de garnissage organisé, du genre ondulé-croisé, chaque bloc comprenant un paquet de lamelles ondulées rectangulaires, dont au moins les trois tronçons les plus hauts de la colonne sont équipés respectivement d'un premier distributeur de liquide, d'un deuxième distributeur de liquide capable d'assurer une fonction de mélange entre des liquides tombant sur le distributeur et d'un troisième distributeur de liquide capable d'assurer une fonction de mélange entre des liquides tombant sur le distributeur, chacun des premier, deuxième et troisième distributeurs étant disposé au-dessus du tronçon respectif et
- au moins les cinq tronçons les plus bas de la colonne étant équipés respectivement d'un distributeur de liquide, capable d'assurer une fonction de mélange entre des liquides tombant sur le distributeur, disposé au-dessus du tronçon respectif, les premier, deuxième et troisième, distributeurs comprennent chacun au moins deux rangées de perforations destinées à la distribution du liquide, une rangée étant disposée au-dessus de l'autre et
- les (N-4)ème (N-3)ème, (N-2)ème, (N-1)ème et Nième distributeurs comprennent une seule rangée de perforations destinées à la distribution de liquide.

Selon un autre objet de l'invention, il est prévu un appareil de séparation d'air comprenant une colonne adaptée pour opérer à une première pression et une colonne adaptée pour opérer à une deuxième pression, la deuxième pression étant inférieure à la première pression, la tête de la colonne adaptée pour opérer à la première pression étant thermiquement reliée à la cuve de la colonne adaptée pour opérer à une deuxième pression, une conduite pour envoyer de l'air épuré à la colonne adaptée pour opérer à la première pression, une conduite pour envoyer un liquide enrichi en oxygène de la colonne adaptée pour opérer à la première pression à la colonne adaptée pour opérer à la deuxième pression, une conduite pour envoyer un liquide enrichi en azote de la colonne adaptée pour opérer à la première pression à la colonne adaptée pour opérer à la deuxième pression, une conduite pour soutirer un fluide enrichi en oxygène de la colonne adaptée pour opérer à une deuxième pression, une conduite pour soutirer un fluide enrichi en azote de la colonne adaptée pour opérer à une deuxième pression, une conduite reliée à un point intermédiaire de la colonne adaptée pour opérer à une deuxième pression pour soutirer un fluide enrichi en argon, cette conduite étant reliée à un système de purification tel que décrit ci-dessus.

L'appareil comprend de préférence au moins deux compresseurs, voire au moins trois compresseurs, connectés en parallèle à la conduite pour envoyer de l'air épuré à la colonne adaptée pour opérer à la première pression.

Selon un autre objet de l'invention, il est prévu un procédé de distillation utilisant un système de purification tel que décrit ci-dessus dans lequel un débit contenant de l'argon et de l'oxygène est envoyé au système de purification et s'y sépare pour former un liquide enrichi en oxygène et un fluide enrichi en argon contenant au plus 100ppm d'oxygène

L'invention sera décrite de manière plus détaillée en se référant aux figures.
[Fig.1] illustre une colonne de purification d'argon selon l'invention.
[Fig.2] illustre un appareil de séparation comprenant une colonne de purification d'argon selon l'invention.

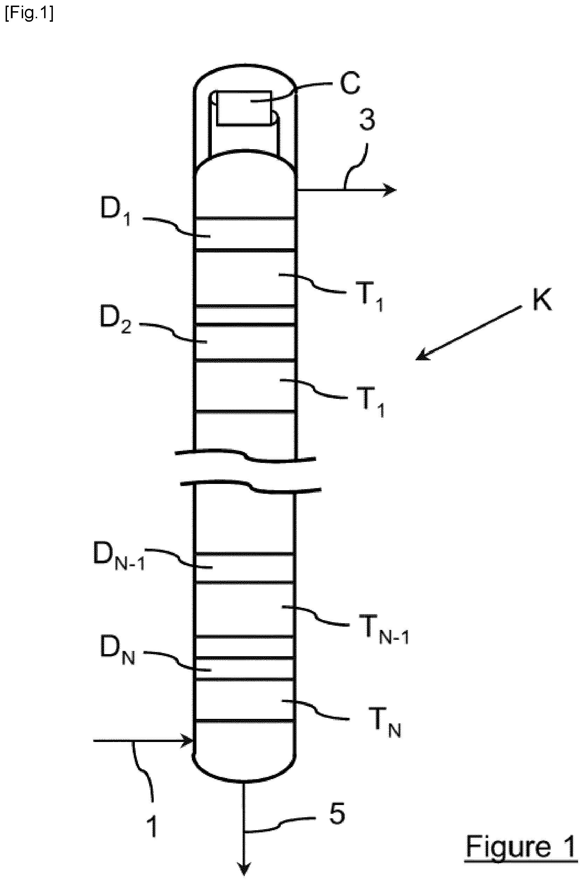

[Fig.1] illustre le système de colonnes comprenant une seule colonne de distillation K. La colonne de distillation K surmontée d'un condenseur C contient N tronçons de distillation T₁, T₂ ... T_{N-1}, T_{N}, chaque tronçon étant composé d'un empilement de blocs de garnissage organisé, du genre ondulé-croisé, chaque bloc comprenant un paquet de lamelles ondulées rectangulaires. Chaque tronçon T₁, T₂ ...T_{N-1}, T_{N} reçoit du liquide d'un distributeur juste au-dessus du tronçon, il y a donc N distributeurs, un pour chaque tronçon. La colonne peut comprendre 150 plateaux théoriques et le nombre N de tronçons est au moins égal à 4, par exemple au moins 8 tronçons.

[Fig.1] montre que les deux tronçons T₁, T₂ les plus proches du condenseur C, sont équipés chacun d'un distributeur de liquide D₁, D₂, D₂ étant capable d'assurer une fonction de mélange entre des liquides tombant depuis le tronçon T₁ immédiatement au-dessus du distributeur D₂.

Le tronçon T₁ le plus proche du condenseur C est équipé d'un distributeur de liquide D₁ qui reçoit du liquide condensé dans le condenseur C et la distribue de préférence sur toute la section horizontale du tronçon T₁.

En cuve de la colonne se trouvent les deux tronçons les plus bas, T_{N-1}, T_{N} et les distributeurs associés, D_{N-1}, D_{N}, le distributeur DN-1 recevant des liquides du N-2^{ème} tronçon et envoyant les liquides mélangés au tronçon TN-1 et le distributeur DN recevant des liquides du N-1ème tronçon et les mélangeant pour les envoyer au dernier tronçon, donc le Nième tronçon.

Les tronçons du troisième au N-2^{ème} et leurs distributeurs ne sont pas illustrés.

La qualité de distribution de liquide effectuée par les distributeurs en haut de la colonne est meilleure que celle de distributeurs en bas de la colonne.

Une possibilité est de dimensionner les premier, deuxième, (N-1)ème et Nième distributeurs chacun pour contenir une hauteur maximale de liquide, la hauteur maximale de liquide ou les hauteurs maximale de liquide des premier et deuxième distributeurs étant supérieure(s) à celle(s) des (N-1)ème et Nième distributeurs. Si la quantité de liquide envoyée à un distributeur le remplit au-delà de son hauteur maximale de liquide, le distributeur déborde et la quantité de liquide en surplus n'est pas retenue par le distributeur.

Les premier et deuxième distributeurs peuvent avoir la même hauteur maximale de liquide et des hauteurs maximales différentes.

Les (N-1)ème et Nième distributeurs peuvent avoir la même hauteur maximale de liquide et des hauteurs maximales différentes.

Une autre possibilité, compatible avec la première est que les premier et deuxième distributeurs comprennent chacun au moins deux rangées de perforations destinées à la distribution du liquide, l'une étant disposée au-dessus de l'autre et
les (N-1)ème et Nième distributeurs comprennent une seule rangée de perforations destinées à la distribution de liquide.

Pour le cas où N est égal à au moins huit, les premier, deuxième, troisième, (N-4)ème (N-3)ème, (N-2)ème, (N-1)ème et Nième distributeurs sont dimensionnés chacun pour contenir une hauteur maximale de liquide, celle(s) des premier, deuxième et troisième distributeurs étant supérieures à celle(s) des (N-4)ème (N-3)ème, (N-2)ème, (N-1)ème et Nième distributeurs.

Une autre alternative est que les premier, deuxième et troisième distributeurs comprennent chacun au moins deux rangées de perforations destinées à la distribution du liquide, l'une étant disposée au-dessus de l'autre et les (N-4)ème (N-3)ème, (N-2)ème, (N-1)ème et Nième distributeurs comprennent chacun une seule rangée de perforations destinée à la distribution du liquide.

Selon un exemple, les (N-1)ème et Nième distributeurs sont dimensionnés pour contenir une hauteur maximale de liquide est inférieure(s) d'au moins 30% à celle(s) pour laquelle les premier et deuxième distributeurs sont dimensionnés.

Sinon les (N-4)ème (N-3)ème, (N-2)ème, N-1)ème et Nième distributeurs sont dimensionnés pour contenir une hauteur maximale de liquide est inférieure(s) d'au moins 30% à celle(s) pour laquelle les premier, deuxième et troisième distributeurs sont dimensionnés.

Pour assurer un bon fonctionnement, les (N-1)ème et Nième distributeurs, voire les (N-4)ème (N-3)ème, (N-2)ème, N-1)ème et Nième distributeurs, sont dimensionnés pour une hauteur maximale de liquide est supérieure à 50mm.

De préférence, les premier et deuxième et éventuellement troisième distributeurs sont dimensionnés pour une hauteur maximale de liquide est entre 150 et 300mm.

En cas de marche réduite, le débit 1 envoyé à la colonne K contenant au moins les premier et deuxième distributeurs correspond à entre 25 et 45% de la charge nominale de la colonne. Dans ce cas, au moins le premier distributeur assurant un écart de débits entre différentes zones de la section horizontale du tronçon qu'il alimente inférieur à 1%, grâce à sa structure perfectionnée.

Par contre les distributeurs en bas de la colonne peuvent avoir des performances moins bonnes, par exemple au moins un distributeur au-dessus d'un des tronçons inférieurs assure un écart de débits entre différentes zones de la section horizontale du tronçon qu'il alimente supérieur à 1%.

De préférence tous les distributeurs allant du deuxième au N-1ème assurent le mélange des liquides qu'ils reçoivent selon au moins un axe, envoyant au moins 20% d'un débits tombant sur une zone de leur section horizontale à une zone diamétralement opposée à celle-ci.

De préférence, le fluide 3 enrichi en argon contient au plus 100ppm d'oxygène.

Au moins trois tronçons inférieurs 3,4,5 sont équipés chacun d'un distributeur de liquide D3, D4, D5, capable d'assurer une fonction entre des liquides tombant sur le distributeur, disposé au-dessus du tronçon et ayant un indice de qualité de distribution en dessous d'un deuxième seuil, inférieur au premier seuil.

Chaque distributeur D₁, D₂ D_{N-2}, D_{N-1}, D_{N} est de préférence du type décrit dans FR3077505, FR2655877, FR2860990 ou FR2732616. Le distributeur peut par exemple comprendre des éléments profilés en forme de U renversé, à parois sensiblement verticales et un fond, dans lequel sont formées une pluralité de fentes parallèles, chaque fente étant recouverte par un des éléments profilés, fixés au fond au moyen des parois de manière permanente et étanche. Des plaquettes sont fixées au côté des éléments profilés afin de former des ouvertures latérales. Le fond peut comprendre des perforations.

Néanmoins d'autres types de distributeur peuvent être utilisés.

Un débit 1 contenant de l'argon et de l'oxygène est envoyé en cuve de la colonne K où il se sépare pour former un débit riche en argon 3 contenant au plus 100ppm d'oxygène en tête de la colonne et un débit enrichi en oxygène 5 en cuve de colonne.

La colonne K est destinée à faire partie d'un appareil de séparation d'air comprenant une première colonne de distillation K1 opérant à une première pression et une deuxième colonne de distillation K2 opérant à une deuxième pression, la deuxième pression étant inférieure à la première pression. La tête de la première colonne est thermiquement reliée à la cuve de la deuxième colonne. De l'air épuré 11 est envoyé à la première colonne K1, un liquide enrichi en oxygène de la première colonne à la deuxième colonne et un liquide enrichi en azote est envoyé de la première colonne à la deuxième colonne. Un fluide enrichi en oxygène est soutiré de la cuve de la deuxième colonne et un fluide enrichi en azote est soutiré de la tête de la deuxième colonne. Une conduite 1 reliée à un point intermédiaire de la deuxième colonne K2 soutire un fluide enrichi en argon de la deuxième colonne, cette conduite étant reliée à la colonne K

La charge nominale de la colonne K est le débit habituel 1 qu'il traite pendant le fonctionnement normal. Ce débit peut baisser. Si par exemple le débit d'air 11 est comprimé par deux compresseurs en parallèle, le débit 17 peut être réduit de moitié, voire deux tiers. Si le débit 11 provient de trois compresseurs en parallèle, le débit 17 peut être réduit de deux tiers , voire trois quarts.

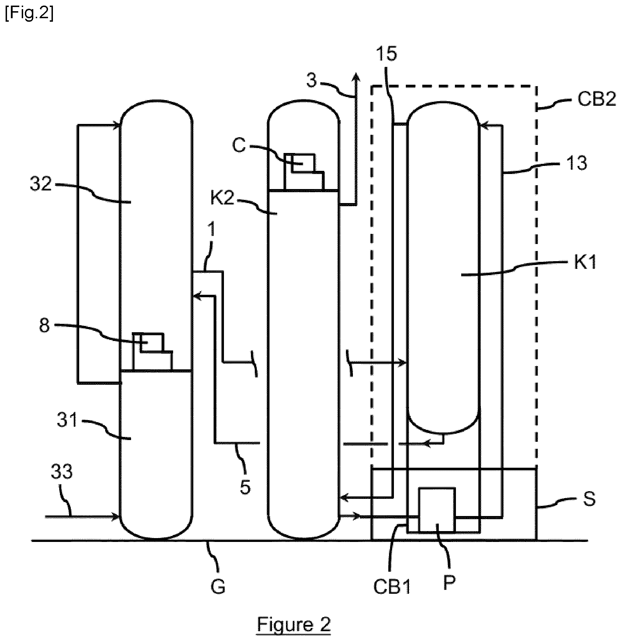

[Fig.2] illustre l'appareil de séparation d'air comprenant deux colonnes de distillation K1, K2, la colonne K1 correspondant à la partie inférieure à la colonne K de la [Fig.1] et la colonne K2 correspondant à la partie supérieure, comprenant donc le condenseur C. Les N tronçons sont distribués entre les deux colonnes K1, K2, les tronçons T1 et T2 au moins se trouvant dans la colonne K2 juste en dessous du condenseur et les tronçons T_{N-1}, T_{N} au moins étant les tronçons les plus en bas de la cuve de la colonne K1.

Chaque tronçon a un distributeur associé comme dans la [Fig.1]; la colonne K1 est alimentée en cuve par le débit enrichi en argon 1 et produit le liquide 5 enrichi en oxygène. Le gaz de tête 15 de la colonne K1 est envoyée à la cuve de la colonne K2 et le liquide de cuve12 de la colonne K2 est envoyé à la tête de la colonne K1 par une pompe P, la possibilité de soutirer un liquide ou gaz intermédiaire n'étant pas exclue. Le gaz 15 se sépare dans la colonne K2 et s'enrichit en argon en montant dans la colonne K2 pour former en tête un produit 3 riche en argon, après passage dans les tronçons T1 et T2.

Le type de distributeur est choisi de la même façon que pour la [Fig.1] de sorte que les distributeurs tout en haut de la colonne K2 distribuent mieux que les distributeurs tout en bas de la colonne K1.

## Revendications

1. Système de purification d'argon par distillation cryogénique comprenant
i. Une seule colonne (K) surmontée d'un condenseur de tête (C), une entrée de fluide (1) dans la partie inférieure de la colonne, une sortie de fluide (3) dans la partie supérieure de la colonne et N tronçons de distillation où N≥4, chaque tronçon étant composé d'un empilement de blocs de garnissage organisé, du genre ondulé-croisé, chaque bloc comprenant un paquet de lamelles ondulées rectangulaires, dont au moins les deux tronçons les plus hauts de la colonne (T1, T2) sont équipés respectivement d'un premier distributeur de liquide (D₁ ), et d'un deuxième distributeur de liquide ( D₂), le deuxième distributeur étant capable d'assurer une fonction de mélange entre des liquides tombant sur le distributeur, chacun des premier et deuxième distributeurs étant disposé au-dessus du tronçon respectif et dont au moins deux tronçons les plus bas de la colonne (TN-1, TN), sont équipés respectivement d'un (N-1)ème et d'un Nième distributeurs de liquide (D_{N-1}, D_{N} ), capables d'assurer une fonction de mélange entre des liquides tombant sur le distributeur, disposé au-dessus du tronçon respectif ou
ii. Une première colonne (K1) et une deuxième colonne (K2) surmontée d'un condenseur de tête (C ), une entrée de fluide (1) dans la partie inférieure de la première colonne, une sortie de fluide (3) dans la partie supérieure de la deuxième colonne, des moyens reliant la tête de la première colonne et la cuve de la deuxième colonne pour permettant à un liquide de cuve de la deuxième colonne d'aller vers la tête de la première colonne et à un gaz de tête de la première colonne d'aller vers la deuxième colonne, les première et deuxième colonne comprenant au total N tronçons de distillation où N≥4, chaque tronçon étant composé d'un empilement de blocs de garnissage organisé, du genre ondulé-croisé, chaque bloc comprenant un paquet de lamelles ondulées rectangulaires, dont au moins les deux tronçons les plus hauts de la deuxième colonne sont équipés respectivement d'un premier distributeur de liquide (D₁, ), et d'un deuxième distributeur de liquide ( D₂ ), capable d'assurer une fonction de mélange entre des liquides tombant sur le distributeur, chacun des premier et deuxième distributeurs étant disposé au-dessus du tronçon respectif et dont au moins deux tronçons les plus bas de la première colonne, sont équipés respectivement d'un (N-1)ème et d'un Nième distributeurs de liquide (D_{N-1}, D_{N} ), capables d'assurer une fonction de mélange entre des liquides tombant sur le distributeur, disposé au-dessus du tronçon respectif
**caractérisé en ce que**
• les premier, deuxième, (N-1)ème et Nième distributeurs sont dimensionnés chacun pour contenir une hauteur maximale de liquide, celle(s) des premier et deuxième distributeurs étant supérieures à celle(s) des (N-1)ème et Nième distributeurs.

2. Système selon la revendication 1 comprenant une seule colonne (K) comprenant N tronçons où N≥8, chaque tronçon étant composé d'un empilement de blocs de garnissage organisé, du genre ondulé-croisé, chaque bloc comprenant un paquet de lamelles ondulées rectangulaires, dont au moins les trois tronçons les plus hauts de la colonne (T1, T2,) sont équipés respectivement d'un premier distributeur de liquide (D1), d'un deuxième distributeur de liquide (D2) capable d'assurer une fonction de mélange entre des liquides tombant sur le distributeur et d'un troisième distributeur de liquide (D3) capable d'assurer une fonction de mélange entre des liquides tombant sur le distributeur, chacun des premier, deuxième et troisième distributeurs étant disposé au-dessus du tronçon respectif et au moins les cinq tronçons les plus bas de la colonne étant équipés respectivement d'un distributeur de liquide, capable d'assurer une fonction de mélange entre des liquides tombant sur le distributeur, disposé au-dessus du tronçon respectif, les premier, deuxième, troisième, (N-4)ème (N-3)ème, (N-2)ème, (N-1)ème et Nième distributeurs sont dimensionnés chacun pour contenir une hauteur maximale de liquide, celle(s) des premier, deuxième et troisième distributeurs étant supérieure(s) à celle(s) des (N-4)ème (N-3)ème, (N-2)ème, (N-1)ème et Nième distributeurs.

3. Système selon l'une des revendications précédentes dans lequel les (N-1)ème et Nième distributeurs (D_{N-1}, D_{N} ), sont dimensionnés pour contenir une hauteur maximale de liquide qui est inférieure(s) d'au moins 30% à celle(s) pour laquelle les premier et deuxième distributeurs sont dimensionnés.

4. Système selon l'une des revendications précédentes dans lequel les (N-1)ème et Nième distributeurs (D_{N-1}, D_{N} ), sont dimensionnés pour une hauteur maximale de liquide qui est supérieure à 50mm.

5. Système selon l'une des revendications précédentes dans lequel des premier et deuxième et éventuellement troisième distributeurs sont dimensionnés pour une hauteur maximale de liquide qui est entre 150 et 300mm.

6. Système selon la revendication 1 comprenant une seule colonne comprenant N tronçons où N≥8, chaque tronçon étant composé d'un empilement de blocs de garnissage organisé, du genre ondulé-croisé, chaque bloc comprenant un paquet de lamelles ondulées rectangulaires, dont au moins les trois tronçons les plus hauts de la colonne sont équipés respectivement d'un premier distributeur de liquide, d'un deuxième distributeur de liquide capable d'assurer une fonction de mélange entre des liquides tombant sur le distributeur et d'un troisième distributeur de liquide capable d'assurer une fonction de mélange entre des liquides tombant sur le distributeur, chacun des premier, deuxième et troisième distributeurs étant disposé au-dessus du tronçon respectif et
au moins les cinq tronçons les plus bas de la colonne étant équipés respectivement d'un distributeur de liquide, capable d'assurer une fonction de mélange entre des liquides tombant sur le distributeur, disposé au-dessus du tronçon respectif, les premier, deuxième et troisième, distributeurs comprennent chacun au moins deux rangées de perforations destinées à la distribution du liquide, une rangée étant disposée au-dessus de l'autre et
les (N-4)ème (N-3)ème, (N-2)ème, (N-1)ème et Nième distributeurs comprennent une seule rangée de perforations destinées à la distribution de liquide.

7. Appareil de séparation d'air comprenant une colonne adaptée pour opérer à une première pression (31) et une colonne adaptée pour opérer à une deuxième pression (32), la deuxième pression étant inférieure à la première pression, la tête de la colonne adaptée pour opérer à la première pression étant thermiquement reliée à la cuve de la colonne adaptée pour opérer à une deuxième pression, une conduite pour envoyer de l'air épuré à la colonne adaptée pour opérer à la première pression, une conduite pour envoyer un liquide enrichi en oxygène de la colonne adaptée pour opérer à la première pression à la colonne adaptée pour opérer à la deuxième pression, une conduite pour envoyer un liquide enrichi en azote de la colonne adaptée pour opérer à la première pression à la colonne adaptée pour opérer à la deuxième pression, une conduite pour soutirer un fluide enrichi en oxygène de la colonne adaptée pour opérer à une deuxième pression, une conduite pour soutirer un fluide enrichi en azote de la colonne adaptée pour opérer à une deuxième pression, une conduite reliée à un point intermédiaire de la colonne adaptée pour opérer à une deuxième pression pour soutirer un fluide enrichi en argon (1), cette conduite étant reliée à un système de purification selon une des revendications précédentes 1 à 4.

8. Appareil selon la revendication 7 comprenant au moins deux compresseurs, voire au moins trois compresseurs, connectés en parallèle à la conduite pour envoyer de l'air épuré (33) à la colonne adaptée pour opérer à la première pression (31).

9. Procédé de distillation utilisant un système de purification selon l'une des revendications 1 à 6 dans lequel un débit (1) contenant de l'argon et de l'oxygène est envoyé au système de purification et s'y sépare pour former un liquide enrichi en oxygène (5) et un fluide enrichi en argon (3) qui contient au plus 100ppm d'oxygène.

## Patentansprüche

1. System zur Reinigung von Argon durch kryogene Destillation, umfassend:
i. eine einzige Kolonne (K), die von einem Kopfkondensator (C) überragt wird, einen Fluideinlass (1) im unteren Teil der Kolonne, einen Fluidauslass (3) im oberen Teil der Kolonne und N Destillationsabschnitte, wobei N ≥ 4 ist, wobei jeder Abschnitt aus einem organisierten Stapel von Packungsblöcken vom wellig-gekreuzten Typ besteht, wobei jeder Block ein Paket von rechteckigen welligen Lamellen umfasst, wobei mindestens die zwei obersten Abschnitte (T1, T2) der Kolonne mit einem ersten Flüssigkeitsverteiler (D₁) bzw. einem zweiten Flüssigkeitsverteiler (D₂) ausgestattet sind, wobei der zweite Verteiler in der Lage ist, eine Mischfunktion zwischen auf den Verteiler fallenden Flüssigkeiten sicherzustellen, wobei der erste und zweite Verteiler jeweils oberhalb des jeweiligen Abschnitts angeordnet sind, und wobei mindestens die zwei untersten Abschnitte (TN-1, TN) der Kolonne mit einem (N-1)-ten bzw. einem N-ten Flüssigkeitsverteiler (D_{N-1}, D_{N}) ausgestattet sind, die in der Lage sind, eine Mischfunktion zwischen auf den oberhalb des jeweiligen Abschnitts angeordneten Verteiler fallenden Flüssigkeiten sicherzustellen, oder
ii. eine erste Kolonne (K1) und eine von einem Kopfkondensator (C) überragte zweite Kolonne (K2), einen Fluideinlass (1) im unteren Teil der ersten Kolonne, einen Fluidauslass (3) im oberen Teil der zweiten Kolonne, Mittel, die den Kopf der ersten Kolonne und den Sumpf der zweiten Kolonne verbinden, um einer Sumpfflüssigkeit der zweiten Kolonne zu ermöglichen, zum Kopf der ersten Kolonne zu strömen, und einem Kopfgas der ersten Kolonne, zur zweiten Kolonne zu strömen, wobei die erste und die zweite Kolonne insgesamt N Destillationsabschnitte umfassen, wobei N ≥ 4 ist, wobei jeder Abschnitt aus einem organisierten Stapel von Packungsblöcken vom wellig-gekreuzten Typ besteht, wobei jeder Block ein Paket von rechteckigen welligen Lamellen umfasst, wobei mindestens die zwei obersten Abschnitte der zweiten Kolonne mit einem ersten Flüssigkeitsverteiler (D₁) bzw. mit einem zweiten Flüssigkeitsverteiler (D₂), der in der Lage ist, eine Mischfunktion zwischen auf den Verteiler fallenden Flüssigkeiten sicherzustellen, ausgestattet sind, wobei der erste und zweite Verteiler jeweils oberhalb des jeweiligen Abschnitts angeordnet sind, und wobei mindestens die zwei untersten Abschnitte der ersten Kolonne mit einem (N-1)-ten bzw. einem N-ten Flüssigkeitsverteiler (D_{N-1}, D_{N}) ausgestattet sind, die in der Lage sind, eine Mischfunktion zwischen auf den oberhalb des jeweiligen Abschnitts angeordneten Verteiler fallenden Flüssigkeiten sicherzustellen,
**dadurch gekennzeichnet, dass**
• der erste, zweite, (N-1)-te und N-te Verteiler jeweils dafür bemessen sind, eine maximale Flüssigkeitshöhe zu enthalten, wobei diejenige(n) des ersten und zweiten Verteilers größer als diejenige(n) des (N-1)-ten und N-ten Verteilers ist (sind).

2. System nach Anspruch 1, welches eine einzige Kolonne (K) umfasst, die N Abschnitte umfasst, wobei N ≥ 8 ist, wobei jeder Abschnitt aus einem organisierten Stapel von Packungsblöcken vom wellig-gekreuzten Typ besteht, wobei jeder Block ein Paket von rechteckigen welligen Lamellen umfasst, wobei mindestens die drei obersten Abschnitte (T1, T2) der Kolonne mit einem ersten Flüssigkeitsverteiler (D1), mit einem zweiten Flüssigkeitsverteiler (D2), der in der Lage ist, eine Mischfunktion zwischen auf den Verteiler fallenden Flüssigkeiten sicherzustellen, bzw. mit einem dritten Flüssigkeitsverteiler (D3), der in der Lage ist, eine Mischfunktion zwischen auf den Verteiler fallenden Flüssigkeiten sicherzustellen, ausgestattet sind, wobei der erste, der zweite und der dritte Verteiler jeweils oberhalb des jeweiligen Abschnitts angeordnet sind und wobei mindestens die fünf untersten Abschnitte der Kolonne jeweils mit einem Flüssigkeitsverteiler ausgestattet sind, der in der Lage ist, eine Mischfunktion zwischen auf den oberhalb des jeweiligen Abschnitts angeordneten Verteiler fallenden Flüssigkeiten sicherzustellen, wobei der erste, zweite, dritte, (N-4)-te, (N-3)-te, (N-2)-te, (N-1)-te und N-te Verteiler jeweils dafür bemessen sind, eine maximale Flüssigkeitshöhe zu enthalten, wobei diejenige(n) des ersten, zweiten und dritten Verteilers größer als diejenige(n) des (N-4)-ten, (N-3)-ten, (N-2)-ten, (N-1)-ten und N-ten Verteilers ist (sind).

3. System nach einem der vorhergehenden Ansprüche, wobei der (N-1)-te und N-te Verteiler (D_{N-1}, D_{N}) dafür bemessen sind, eine maximale Flüssigkeitshöhe zu enthalten, welche um mindestens 30 % kleiner als diejenige(n) ist (sind), für welche der erste und zweite Verteiler bemessen sind.

4. System nach einem der vorhergehenden Ansprüche, wobei der (N-1)-te und N-te Verteiler (D_{N-1}, D_{N}) für eine maximale Flüssigkeitshöhe bemessen sind, welche größer als 50 mm ist.

5. System nach einem der vorhergehenden Ansprüche, wobei der erste und zweite und gegebenenfalls der dritte Verteiler für eine maximale Flüssigkeitshöhe bemessen sind, welche zwischen 150 und 300 mm beträgt.

6. System nach Anspruch 1, welches eine einzige Kolonne umfasst, die N Abschnitte umfasst, wobei N ≥ 8 ist, wobei jeder Abschnitt aus einem organisierten Stapel von Packungsblöcken vom wellig-gekreuzten Typ besteht, wobei jeder Block ein Paket von rechteckigen welligen Lamellen umfasst, wobei mindestens die drei obersten Abschnitte der Kolonne mit einem ersten Flüssigkeitsverteiler, mit einem zweiten Flüssigkeitsverteiler, der in der Lage ist, eine Mischfunktion zwischen auf den Verteiler fallenden Flüssigkeiten sicherzustellen, bzw. mit einem dritten Flüssigkeitsverteiler, der in der Lage ist, eine Mischfunktion zwischen auf den Verteiler fallenden Flüssigkeiten sicherzustellen, ausgestattet sind, wobei der erste, der zweite und der dritte Verteiler jeweils oberhalb des jeweiligen Abschnitts angeordnet sind und
wobei mindestens die fünf untersten Abschnitte der Kolonne jeweils mit einem Flüssigkeitsverteiler ausgestattet sind, der in der Lage ist, eine Mischfunktion zwischen auf den oberhalb des jeweiligen Abschnitts angeordneten Verteiler fallenden Flüssigkeiten sicherzustellen, wobei der erste, zweite und dritte Verteiler jeweils mindestens zwei für die Verteilung der Flüssigkeit bestimmte Reihen von Perforationen umfassen, wobei eine Reihe über der anderen angeordnet ist und
der (N-4)-te, (N-3)-te, (N-2)-te, (N-1)-te und N-te Verteiler eine einzige für die Verteilung von Flüssigkeit bestimmte Reihe von Perforationen umfassen.

7. Vorrichtung zur Lufttrennung, umfassend eine Kolonne, die zum Betrieb bei einem ersten Druck eingerichtet ist (31), und eine Kolonne, die zum Betrieb bei einem zweiten Druck eingerichtet ist (32), wobei der zweite Druck niedriger als der erste Druck ist, wobei der Kopf der zum Betrieb bei dem ersten Druck eingerichteten Kolonne mit dem Sumpf der zum Betrieb bei einem zweiten Druck eingerichteten Kolonne thermisch verbunden ist, eine Leitung zum Leiten der gereinigten Luft zu der zum Betrieb bei dem ersten Druck eingerichteten Kolonne, eine Leitung zum Leiten einer mit Sauerstoff angereicherten Flüssigkeit von der zum Betrieb bei dem ersten Druck eingerichteten Kolonne zu der zum Betrieb bei dem zweiten Druck eingerichteten Kolonne, eine Leitung zum Leiten einer mit Stickstoff angereicherten Flüssigkeit von der zum Betrieb bei dem ersten Druck eingerichteten Kolonne zu der zum Betrieb bei dem zweiten Druck eingerichteten Kolonne, eine Leitung zum Abziehen eines mit Sauerstoff angereicherten Fluids von der zum Betrieb bei einem zweiten Druck eingerichteten Kolonne, eine Leitung zum Abziehen eines mit Stickstoff angereicherten Fluids von der zum Betrieb bei einem zweiten Druck eingerichteten Kolonne, eine Leitung, die mit einem Zwischenpunkt der zum Betrieb bei einem zweiten Druck eingerichteten Kolonne verbunden ist, zum Abziehen eines mit Argon angereicherten Fluids (1), wobei diese Leitung mit einem System zur Reinigung nach einem der vorhergehenden Ansprüche 1 bis 4 verbunden ist.

8. Vorrichtung nach Anspruch 7, welche mindestens zwei Kompressoren oder sogar mindestens drei Kompressoren umfasst, die zu der Leitung zum Leiten der gereinigten Luft (33) zu der zum Betrieb bei dem ersten Druck eingerichteten Kolonne (31) parallel geschaltet ist.

9. Destillationsverfahren, bei dem ein System zur Reinigung nach einem der Ansprüche 1 bis 6 verwendet wird, wobei ein Strom (1), der Argon und Sauerstoff enthält, zu dem System zur Reinigung geleitet wird und dort getrennt wird, um eine mit Sauerstoff angereicherte Flüssigkeit (5) und ein mit Argon angereichertes Fluid (3), welches höchstens 100 ppm Sauerstoff enthält, zu bilden.

## Claims

1. System for purifying argon by cryogenic distillation, comprising
i. A single column (K) surmounted by a top-end condenser (C), a fluid inlet (1) in the lower part of the column, a fluid outlet (3) in the upper part of the column, and N distillation sections where N≥4, each section being made up of a stack of units of structured packing, of the cross-corrugated type, each unit comprising a packet of rectangular corrugated sheets, of which at least the two uppermost sections (T1, T2) of the column are equipped respectively with a first liquid distributor (D₁) and with a second liquid distributor (D₂), the second distributor being capable of performing a function of mixing together liquids that fall onto the distributor, each of the first and second distributors being positioned above the respective section and of which at least two lowermost sections (TN-1, TN) of the column are respectively equipped with a (N-1)th and an Nth liquid distributor (D_{N-1}, D_{N}) capable of performing a function of mixing together liquids that fall onto the distributor, and which is arranged above the respective section, or
ii. A first column (K1) and a second column (K2) surmounted by a top-end condenser (C), a fluid inlet (1) in the lower part of the first column, a fluid outlet (3) in the upper part of the second column, means connecting the top end of the first column and the bottom end of the second column to allow a bottom liquid from the second column to be conveyed to the top end of the first column and allow a top-end gas from the first column to be conveyed to the second column, the first and second columns comprising in total N distillation sections where N≥4, each section being made up of a stack of units of structured packing, of the cross-corrugated type, each unit comprising a packet of rectangular corrugated sheets, of which at least the two uppermost sections of the second column are equipped respectively with a first liquid distributor (D₁) and with a second liquid distributor (D₂) capable of performing a function of mixing together liquids that fall onto the distributor, each of the first and second distributors being positioned above the respective section and of which at least two lowermost sections of the first column are respectively equipped with a (N-1)th and an Nth liquid distributor (D_{N-1}, D_{N}) capable of performing a function of mixing together liquids that fall onto the distributor, and which is arranged above the respective section,
**characterized in that**:
□ the first, second, (N-1)th and Nth distributors are each dimensioned to contain a maximum height of liquid head, that (those) of the first and second distributors being greater than that (those) of the (N-1)th and Nth distributors.

2. System according to Claim 1, comprising a single column (K) comprising N sections where N≥8, each section being made up of a stack of units of structured packing, of the cross-corrugated type, each unit comprising a packet of rectangular corrugated sheets, of which at least the three uppermost sections (T1, T2) of the column are equipped respectively with a first liquid distributor (D1), with a second liquid distributor (D2) capable of performing a function of mixing together liquids that fall onto the distributor, and with a third liquid distributor (D3) capable of performing a function of mixing together liquids that fall onto the distributor, each of the first, second and third distributors being arranged above the respective section, and
at least the five lowermost sections of the column being respectively equipped with a liquid distributor capable of performing a function of mixing together liquids that fall onto the distributor, and which is arranged above the respective section, the first, second, third, (N-4)th, (N-3)th, (N-2)th, (N-1)th and Nth distributors each being dimensioned to contain a maximum height of liquid head, that (those) of the first, second and third distributors being greater than that (those) of the (N-4)th, (N-3)th, (N-2)th, (N-1)th and Nth distributors.

3. System according to one of the preceding claims, wherein the (N-1)th and Nth distributors (D_{N-1}, D_{N} ) are dimensioned to contain a maximum height of liquid head, which is at least 30% less than that (those) for which the first and second distributors are dimensioned.

4. System according to one of the preceding claims, wherein the (N-1)th and Nth distributors (D_{N-1}, D_{N} ) are dimensioned for a maximum height of liquid head, which is greater than 50 mm.

5. System according to one of the preceding claims, wherein the first and second, and, where applicable, third, distributors are dimensioned for a maximum height of liquid head, which is between 150 and 300 mm.

6. System according to Claim 1, comprising a single column comprising N sections where N≥8, each section being made up of a stack of units of structured packing, of the cross-corrugated type, each unit comprising a packet of rectangular corrugated sheets, of which at least the three uppermost sections of the column are equipped respectively with a first liquid distributor, with a second liquid distributor capable of performing a function of mixing together liquids that fall onto the distributor, and with a third liquid distributor capable of performing a function of mixing together liquids that fall onto the distributor, each of the first, second and third distributors being arranged above the respective section, and
at least the five lowermost sections of the column being respectively equipped with a liquid distributor capable of performing a function of mixing together liquids that fall onto the distributor, and which is arranged above the respective section, the first, second and third distributors each comprising at least two rows of perforations intended for distributing the liquid, one row being arranged above the other, and
the (N-4)th, (N-3)th, (N-2)th, (N-1)th and Nth distributors comprising a single row of perforations intended for distributing liquid.

7. Air separation unit comprising a column suited to operating at a first pressure (31) and a column suited to operating at a second pressure (32), the second pressure being lower than the first pressure, the top end of the column suited to operating at the first pressure being thermally connected to the bottom end of the column suited to operating at a second pressure, a pipe for sending purified air to the column suited to operating at the first pressure, a pipe for sending an oxygen-enriched liquid from the column suited to operating at the first pressure to the column suited to operating at the second pressure, a pipe for sending a nitrogen-enriched liquid from the column suited to operating at the first pressure to the column suited to operating at the second pressure, a pipe for withdrawing an oxygen-enriched fluid from the column suited to operating at a second pressure, a pipe for withdrawing a nitrogen-enriched fluid from the column suited to operating at a second pressure, and a pipe connected to an intermediate point on the column suited to operating at a second pressure so as to withdraw an argon-enriched fluid (1), this pipe being connected to a purification system according to one of the preceding Claims 1 to 4.

8. Unit according to Claim 7, comprising at least two compressors, or even at least three compressors, connected in parallel to the pipe for sending purified air (33) to the column suited to operating at the first pressure (31).

9. Distillation method using a purification system according to one of Claims 1 to 6, wherein a flow (1) containing argon and oxygen is sent to the purification system where it is separated to form an oxygen-enriched liquid (5) and an argon-enriched fluid (3) which contains at most 100 ppm of oxygen.
